# EUROPEAN PATENT APPLICATION

(11) **EP 3 505 970 A1**
(43) Date of publication of application: **03.07.2019**
(21) Application number: 18214742.1
(22) Date of filing: 20.12.2018
(51) Int. Cl.: G01T 1/20, G21K 1/04

(54) **AN AFTERGLOW TESTING DEVICE AND AN AFTERGLOW TESTING METHOD FOR A SCINTILLATOR**

(30) Priority: 26.12.2017 CN 201711428826
(71) Applicant: Nuctech Company Limited, Beijing 100084 (CN)
(72) Inventor: ZHANG, Qingjun, BEIJING, 100084 (CN); ZHANG, Wenjian, BEIJING, 100084 (CN); ZOU, Xiang, BEIJING, 100084 (CN); SUN, Lifeng, BEIJING, 100084 (CN); ZHANG, Zhanqiang, BEIJING, 100084 (CN)
(74) Representative: Held, Stephan

(57) **Abstract**

The invention discloses an afterglow testing device and an afterglow testing method for a scintillator. The afterglow testing device comprises a ray generator, a rotating body and an afterglow detector, wherein the rotating body is arranged between the ray generator and a scintillator to be tested and is provided with an exit hole which allows rays to pass, the rotating body rotates at a constant speed relative to the ray generator to achieve on-off of ray irradiation on the scintillator to be tested, and the afterglow detector is used for receiving the afterglow of the scintillator to be tested. The afterglow testing device performs on-off of rays received by the scintillator to be detected by controlling the rotating body to rotate at a constant speed, thereby increasing the stability of the test. Moreover, the rotating body rotates at a constant speed to allow the rays emitted by the ray generator to pass through the exit hole at intervals to illuminate the scintillator at intervals, thereby facilitating multiple tests on the afterglow of the scintillator and improving the accuracy of the afterglow test.

## Description

The present invention is based on the CN application No. 201711428826.8 with the application date December 26, 2017, and claims priority thereof, and the disclosure of the CN application is hereby incorporated in the present application in its entirety.

### FIELD OF THE INVENTION

The present invention relates to the field of ray detection, in particular to an afterglow testing device and an afterglow testing method for a scintillator.

### BACKGROUND OF THE INVENTION

In detector products based on x-ray machines, the afterglow problem of detectors made of cesium iodide crystals is relatively serious, especially for image penetration indicators. In order to improve the accuracy of the image penetration indicators, the afterglow needs to be removed from the image data during actual use. So, it is necessary to accurately test the afterglow data of the cesium iodide crystals.

In the prior art, the afterglow testing device usually uses a belt to drive a steel plate to simulate a process in which an optical machine is quickly turned off. The inventors find through analysis that the start and stop of the steel plate driven by the belt have acceleration and deceleration. Therefore, the stability of the steel plate during the moving process is insufficient, resulting in deviation in each test, which leads to inaccurate afterglow test data.

### SUMMARY OF THE INVENTION

The present invention provides an afterglow testing device for a scintillator for improving the accuracy of an afterglow test.

The present invention provides an afterglow testing device for a scintillator, comprising a ray generator, a rotating body and an afterglow detector, wherein the rotating body is configured to be between the ray generator and the scintillator to be tested and is provided with an exit hole which allows rays to pass through, the rotating body for rotating at a constant speed relative to the ray generator to achieve on-off of ray irradiation on the scintillator to be tested, and the afterglow detector for receiving the afterglow of the scintillator to be tested.

In some embodiments, the rotating body comprises a columnar rotating body rotatable about its axis.

In some embodiments, the exit hole comprises an elongated hole that passes through the axis of the columnar rotating body and extends in the diameter direction of the columnar rotating body.

In some embodiments, the vertical-sectional area of the elongated hole is constant.

In some embodiments, the elongated hole is provided with a first segment and a second segment that are respectively arranged on two sides of the axis of the columnar rotating body, and rays successively pass through the first segment and the second segment to illuminate the scintillator to be tested, wherein from the axis of the columnar rotating body to the radial outer side, the vertical-sectional area of the first segment is constant, and the vertical-sectional area of the second segment is gradually increased; or from the axis of the columnar rotating body to the radial outer side, the vertical-sectional areas of both the first segment and the second segment are gradually increased.

In some embodiments, from the axis of the columnar rotating body to the radial outer side, the vertical-sectional areas of both the first segment and the second segment are gradually increased, and the cross sections of the first segment and the second segment are sector-shaped.

In some embodiments, one end of the second segment close to the first segment is smoothly transmitted to the first segment.

In some embodiments, the vertical sectional shape of the elongated hole is polygon.

In some embodiments, the afterglow testing device further comprises a motor for driving the rotating body to rotate.

In some embodiments, the afterglow testing device comprises a data processing device, which calculates the afterglow data of the scintillator to be detected according to the afterglow received by the afterglow detector.

In some embodiments, the density of the rotating body is greater than 16g/cm3.

The present invention further provides an afterglow testing method for a scintillator, comprising:
placing a rotating body between the ray generator and the scintillator to be tested;
make the rotating body rotate at a constant speed to achieve on-off of ray irradiation on the scintillator to be tested;
obtaining and calculating the afterglow data of the scintillator to be tested.

In some embodiments, the obtaining and calculating the afterglow data of the scintillator to be tested comprises:
obtaining multiple groups of the afterglow data;
cumulative correction of the multiple groups of the afterglow data is made.

The afterglow testing device for the scintillator according to the present invention comprises a ray generator, a rotating body and an afterglow detector, wherein the rotating body is arranged between the ray generator and a scintillator to be tested and is provided with an exit hole which allows rays to pass through, the rotating body rotates at a constant speed relative to the ray generator to achieve on-off of ray irradiation on the scintillator to be tested, and the afterglow detector is used for receiving the afterglow of the scintillator to be tested. The afterglow testing device of the present invention performs on-off of rays received by the scintillator to be detected by controlling the rotating body to rotate at a constant speed, thereby increasing the stability of the test. Moreover, the rotating body rotates at a constant speed to allow the rays emitted by the ray generator to pass through the exit hole at intervals to illuminate the scintillator at intervals, thereby facilitating multiple tests on the afterglow of the scintillator and improving the accuracy of the afterglow test.

Other features of the present invention and the advantages thereof will become apparent through the following detailed descriptions of exemplary embodiments of the present invention with reference to the accompanying drawings.

### BRIEF DESCRIPTION OF THE ACCOMPANYING DRAWINGS

The accompanying drawings described here are used for providing a further understanding on the present invention, and constitute a part of the present application. The schematic embodiments of the present invention and the descriptions thereof are used for interpreting the present invention, rather than constituting improper limitations to the present invention. In the drawings:
FIG. 1 is a structure diagram of an afterglow testing device for a scintillator according to the present invention;
FIG. 2 is a structure diagram of an embodiment of a rotating body in FIG. 1.
FIG. 3 is a schematic diagram of a rotating process of the rotating body shown in FIG. 2;
FIG. 4 is a structure diagram of another embodiment of the rotating body in FIG. 1;
FIG. 5 is a structure diagram of another embodiment of the rotating body in FIG. 1;
FIG. 6 is a schematic diagram of a rotating process of the rotating body shown in FIG. 5.

### Each reference sign represents:

1-ray generator; 2-rotating body; 21-elongated hole; 211-first segment; 212-second segment; B-test object; A-scintillator.

### DETAILED DESCRIPTION OF THE PREFERRED EMBODIMENTS

A clear and complete description will be made to the technical solutions in the embodiments of the present invention below in combination with the accompanying drawing in the embodiments of the present invention. Apparently, the embodiments described are only part of the embodiments of the present invention, not all of them. The following description of at least one exemplary embodiment is actually only illustrative, and serves by no means as any limitation to the present invention and an application or usage thereof. All other embodiments obtained by a person of ordinary skill in the art based on the embodiments of the present invention without creative efforts shall fall within the protection scope of the present invention.

Unless otherwise specified, relative arrangements of parts and steps, expressions of figures and numerical values described in these embodiments do not limit the scope of the present invention. Meanwhile, it should be understood that, in order to facilitate description, the sizes of all parts shown in the drawings are not drawn according to an actual proportional relation. Technologies, methods and devices known by those of ordinary skills in related arts may not be discussed in detail, but in appropriate situations, the technologies, methods and devices should be regarded as part of the specification as granted. In all of the examples shown and discussed here, any specific value should be interpreted as illustrative only but not restrictive. Accordingly, other examples of the exemplary embodiments may have different values. It should be noted that similar reference numerals and letters in the following drawings represent similar terms, so that once a certain term is defined in a drawing, there is no need of further discussing this term in the follow-up drawings.

For ease of description, spatially relative terms such as "above...", "on...", "on the upper surface..." and "upper..." may be used here to describe the spatial positional relationship of one device or feature shown in the drawings with other devices or features. It should be understood that the spatially relative terms are intended to encompass different orientations in use or operation besides the orientations of the devices described in the drawings. For example, if a device in the drawings is inverted, the device described as "above other device or structure" or "on other device or structure" will be positioned "below other device or structure" or "under other device or structure". Thus, the exemplary term "above..." may include both "above..." and "below...". The device may also be positioned in other different ways (rotated 90 degrees or in other orientations) and the corresponding description of the space used herein is explained accordingly.

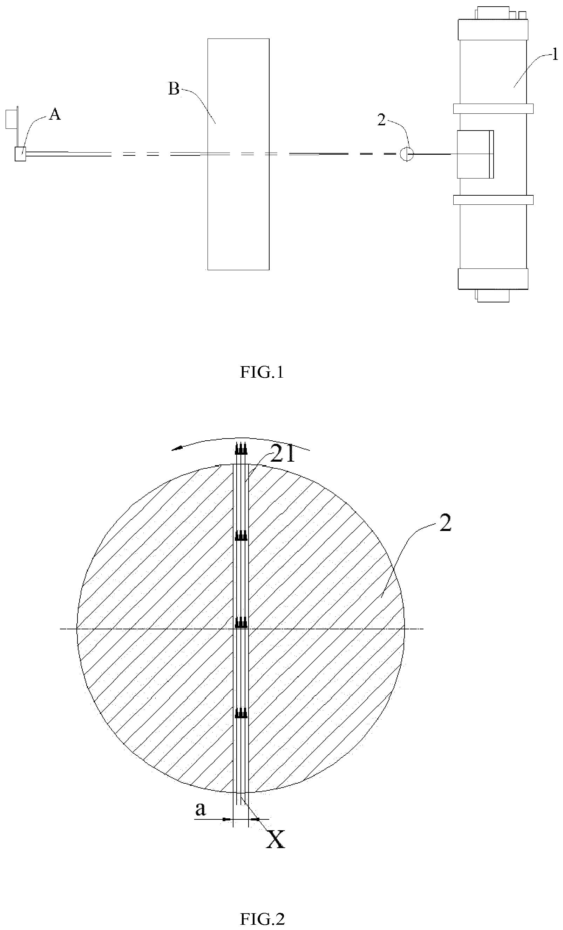

As shown in FIG. 1, an afterglow testing device for a scintillator according to an embodiment of the present invention includes a ray generator 1, a rotating body 2 and an afterglow detector (not shown). The rotating body 2 is arranged between the ray generator 1 and a scintillator A to be tested and is provided with an exit hole which allows rays to pass through. The rotating body 2 rotates at a constant speed relative to the ray generator 1 to control opening and closing on rays received by the scintillator to be tested, and the afterglow detector is used for receiving the afterglow of the scintillator to be tested.

The afterglow testing device controls the rotation of the rotating body 2 to control opening and closing on rays received by the scintillator to be tested, thereby increasing the stability of the test. Moreover, the rotating body 2 rotates at a constant speed to allow the rays emitted by the ray generator to pass through the exit hole at intervals to illuminate the scintillator at intervals, thereby facilitating multiple tests on the afterglow of the scintillator and improving the accuracy of the afterglow test.

Preferably, the afterglow testing device of this embodiment includes a data processing device, which calculates the afterglow data of the scintillator to be detected according to the afterglow received by the afterglow detector. After the rotating body 2 rotates at a constant speed to acquire multiple groups of afterglow test data, the data processing device can perform cumulative correction on the multiple groups of afterglow test data, thereby improving the accuracy of the afterglow test data.

The data processing device can be provided separately, or the data processing device is integrated into the afterglow detector, and the afterglow detector can directly process the received afterglow signals.

As shown in FIG. 1, the afterglow testing device of this embodiment further includes a test object B arranged between the rotating body 2 and the scintillator A to simulate a real scene when the scintillator is used for the detector.

Preferably, the afterglow testing device of this embodiment further includes a sample holder for mounting the scintillator A.

Specifically, the detector equipped with the scintillator A is directly used for testing.

The afterglow testing device of this embodiment can be used to test the afterglow of crystals of cesium iodide and the like.

The structure of the rotating body according to the specific embodiment of the present invention will be described in detail below according to FIGS. 2 to 6.

In this embodiment, the rotating body 2 includes a columnar rotating body. The columnar rotating body rotates about its axis. When the columnar rotating body rotates about its axis, the exit hole formed in the columnar rotating body can open and close rays.

Preferably, the rotating body of this embodiment is made of a high-density material, for example, a material such as tungsten alloy or tantalum having the density of greater than 16 g/cm3.

As shown in FIGS. 2 to 6, the exit hole of this embodiment includes an elongated hole 21 that passes through the axis of the columnar rotating body and extends in the diameter direction of the columnar rotating body. By such arrangement, rays can illuminate the scintillator at certain time intervals and be closed, thereby facilitating multiple tests on the afterglow and improving the accuracy of the afterglow tests.

In one embodiment, as shown in FIG. 2, the opening size of the elongated hole 21 is constant. In other words, the vertical-sectional area of the elongated hole is constant. The width "a" of the elongated hole should be sufficient for the rays X to map and cover all the scintillator to be tested.

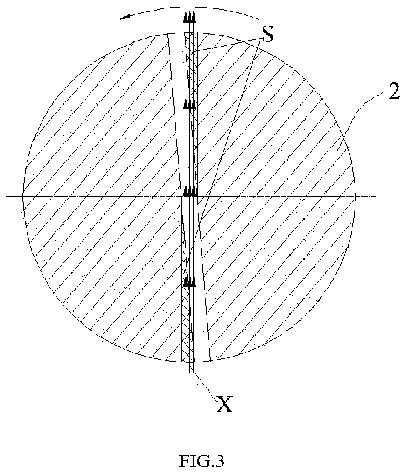

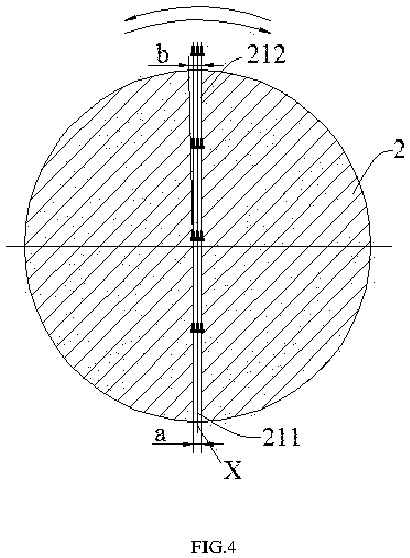

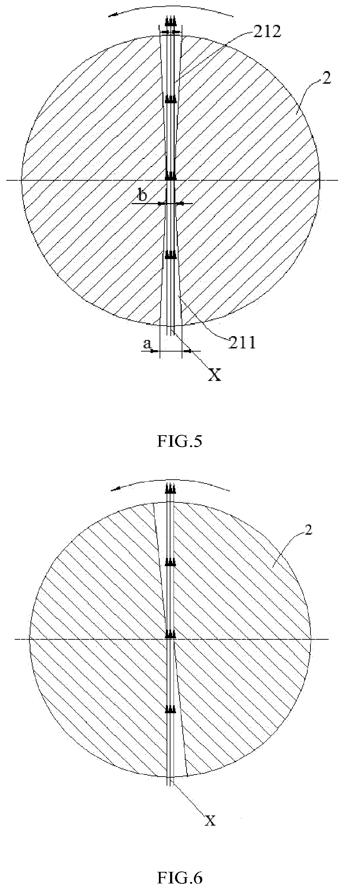

FIG. 3 exemplarily shows that the rotating body 2 is rotated counterclockwise to achieve on-off control of the rays X. When the rotating body 2 is rotated to immediately close the rays, the rays X can be irradiated onto the scintillator through a shadow area S. In order that the rotating body can completely close the rays to improve the interference of energy deposition on the scintillator to the afterglow test, as shown in FIGS. 4 and 5, in another embodiment, the elongated hole 21 is provided with a first segment 211 and a second segment 212 that are separately arranged on two sides of the axis of the columnar rotating body, and the rays X successively pass through the first segment 211 and the second segment 212 to illuminate the scintillator to be tested.

As shown in FIG. 4, in this embodiment, the vertical-sectional area of the first segment 211 is constant, while the vertical-sectional area of the second segment 212 is gradually enlarged from the axis of the columnar rotating body to the radial outer side. The width of the first segment 211 is "a". The second segment 212 has a minimum width "a" and a maximum width "b". The width "a" is large enough to ensure that the rays X map and cover all the scintillator to be tested.

When the afterglow is tested using the rotating body as shown in FIG. 4, the rotating body can be controlled to perform single repeated tests, which can significantly reduce the interference of the energy deposition to the afterglow test when the rays pass through the shadow area.

Preferably, as shown in FIG. 5, in another embodiment, the vertical-sectional area of the first segment and the second segment are gradually enlarged from the axis of the columnar rotating body to the radial outer side. As shown in Fig. 6, such arrangement can eliminate the interference of the energy deposition of the rays X passing through the shadow area on the scintillator to the afterglow test. Moreover, the afterglow testing device of this embodiment facilitates superposition of multiple times of signals, increases the signal to noise ratio, and improves the accuracy of the afterglow test.

In this embodiment, the first segment and the second segment are arranged symmetrically.

In this embodiment, the cross sections of the first segment and the second segment are sector-shaped.

In this embodiment, one end of the second segment close to the first segment is smoothly transmitted to the first segment.

In this embodiment, the vertical sectional shape of the elongated hole is polygon. Specially, the vertical sectional shape of the hole is quadrilateral.

In addition, the above-mentioned rotating body of this embodiment can also directly serve as a collimator for detector test, and the exit hole directly serves as a slit for emitting rays by the collimator to define a range of ray radiation. Moreover, the afterglow testing device of this embodiment can be used not only to test the afterglow of the scintillator to grade the afterglow of the scintillator, but also can be directly used in inspection equipment to eliminate the interference of the afterglow on the image.

The ray generator of this embodiment is an X-ray machine that generates X rays. Of course, the ray generator can also be a generator that emits other rays.

An afterglow testing method for a scintillator according to an embodiment of the present invention comprises:
placing a rotating body between the ray generator 1 and the scintillator A to be tested;
make the rotating body rotate at a constant speed to achieve on-off of ray irradiation on the scintillator A to be tested;
obtaining and calculating the afterglow data of the scintillator A to be tested.

In this embodiment, the obtaining and calculating the afterglow data of the scintillator(A) to be tested comprises:
obtaining multiple groups of the afterglow data;
cumulative correction of the multiple groups of the afterglow data is made.

In summary, the afterglow testing device for the scintillator according to this embodiment has at least the following advantages:

The rotating body rotates at a constant speed to improve the stability of the test.

The rotating body is rotated to achieve on-off control of the rays to facilitate the processing of the afterglow data by cumulatively correcting the error by multiple tests, thereby improving the accuracy of the afterglow test.

Finally, it should be noted that the above embodiments are only for explaining, but not limiting, the technical solutions of the present invention. Although the present invention has been described in detail with reference to the preferred embodiments, those of ordinary skill in the art should understood that the specific embodiments of the present invention may still be modified, or part of the technical features may be equivalently substituted without departing from the spirit of the technical solutions of the present invention, and such modifications or substitutions shall fall within the scope of the technical solutions of the present invention.

## Claims

1. An afterglow testing device for a scintillator, comprising a ray generator (1), a rotating body (2) and an afterglow detector, wherein the rotating body (2) is configured to be between the ray generator (1) and the scintillator (A) to be tested and is provided with an exit hole which allows rays to pass through, the rotating body (2) for rotating at a constant speed relative to the ray generator (1) to achieve on-off of ray irradiation on the scintillator (A) to be tested, and the afterglow detector for receiving the afterglow of the scintillator(A) to be tested.

2. The afterglow testing device for a scintillator according to claim 1, wherein the rotating body (2) comprises a columnar rotating body rotatable about its axis.

3. The afterglow testing device for a scintillator according to claim 2, wherein the exit hole comprises an elongated hole (21) that passes through the axis of the columnar rotating body and extends in the diameter direction of the columnar rotating body.

4. The afterglow testing device for a scintillator according to claim 3, wherein the vertical-sectional area of the elongated hole (21) is constant.

5. The afterglow testing device for a scintillator according to claim 3, wherein the elongated hole (21) is provided with a first segment (211) and a second segment (212) that are respectively arranged on two sides of the axis of the columnar rotating body, and rays successively pass through the first segment (211) and the second segment (212) to illuminate the scintillator to be tested, wherein from the axis of the columnar rotating body to the radial outer side, the vertical-sectional area of the first segment (211) is constant, and the vertical-sectional area of the second segment (212) is gradually increased; or from the axis of the columnar rotating body to the radial outer side, the vertical-sectional areas of both the first segment (211) and the second segment (212) are gradually increased.

6. The afterglow testing device for a scintillator according to claim 5, wherein from the axis of the columnar rotating body to the radial outer side, the vertical-sectional areas of both the first segment (211) and the second segment (212) are gradually increased, and the cross sections of the first segment (211) and the second segment (212) are sector-shaped.

7. The afterglow testing device for a scintillator according to claim 5, wherein one end of the second segment close to the first segment is smoothly transmitted to the first segment.

8. The afterglow testing device for a scintillator according to claim 3, wherein the vertical-sectional shape of the elongated hole (21) is polygon.

9. The afterglow testing device for a scintillator according to claim 1, further comprising a motor for driving the rotating body to rotate.

10. The afterglow testing device for a scintillator according to claim 1, comprising a data processing device, which calculates the afterglow data of the scintillator to be detected according to the afterglow received by the afterglow detector.

11. The afterglow testing device for a scintillator according to claim 1, wherein the density of the rotating body (2) is greater than 16g/cm3.

12. An afterglow testing method for a scintillator, comprising:
placing a rotating body between the ray generator (1) and the scintillator (A) to be tested,;
make the rotating body rotate at a constant speed to achieve on-off of ray irradiation on the scintillator (A) to be tested;
obtaining and calculating the afterglow data of the scintillator(A) to be tested.

13. The afterglow testing method for a scintillator, wherein the obtaining and calculating the afterglow data of the scintillator(A) to be tested comprises:
obtaining multiple groups of the afterglow data;
cumulative correction of the multiple groups of the afterglow data is made.
